# FASCICULE DE BREVET EUROPEEN

(11) **EP 3 100 201 B1**
(45) Date de publication et mention de la délivrance du brevet: **04.12.2019**
(21) Numéro de dépôt: 15704348.0
(22) Date de dépôt: 21.01.2015
(51) Int. Cl.: G06F 21/55, G06F 9/455, H04L 29/06

(54) **PROCÉDÉ DE DÉTECTION D'ATTAQUES DANS UNE ARCHITECTURE INFORMATIQUE DANS LE NUAGE**
VERFAHREN ZUM NACHWEIS VON ANGRIFFEN IN EINER CLOUD-COMPUTING-ARCHITEKTUR
METHOD OF DETECTING ATTACKS IN A CLOUD COMPUTING ARCHITECTURE

(30) Priorité: 30.01.2014 FR 1450763
(43) Date de publication de la demande: 07.12.2016
(73) Titulaire: Orange, 75015 Paris (FR)
(72) Inventeur: LAZRI, Kahina, 75014 Paris (FR); LANIEPCE, Sylvie, F-14000 Caen (FR)
(86) Numéro de dépôt international: PCT/FR2015/050147
(87) Numéro de publication internationale: WO 2015/114236

(56) Documents cités:
- FR-A1- 2 977 050
- ZHANG ZHENZHONG ET AL: "A Model Based Load-Balancing Method in IaaS Cloud", INTERNATIONAL CONFERENCE ON PARALLEL PROCESSING, IEEE, 1 octobre 2013 (2013-10-01), pages 808-816, XP032534692, ISSN: 0190-3918, DOI: 10.1109/ICPP.2013.95 [extrait le 2013-12-18]
- FATEMEH AZMANDIAN ET AL: "Virtual machine monitor-based lightweight intrusion detection", ACM SIGOPS OPERATING SYSTEMS REVIEW, vol. 45, no. 2, 18 juillet 2011 (2011-07-18), page 38, XP055101403, ISSN: 0163-5980, DOI: 10.1145/2007183.2007189
- CLAUDIA CANALI ET AL: "Automated clustering of VMs for scalable cloud monitoring and management", SOFTWARE, TELECOMMUNICATIONS AND COMPUTER NETWORKS (SOFTCOM), 2012 20TH INTERNATIONAL CONFERENCE ON, IEEE, 11 septembre 2012 (2012-09-11), pages 1-5, XP032470550, ISBN: 978-1-4673-2710-7

## Description

La présente invention concerne un procédé de détection d'attaques dans un environnement informatique virtualisé, c'est-à-dire rendu virtuel.

Elle trouve une application particulièrement intéressante dans la sécurisation des systèmes informatiques dont l'architecture est basée sur des ressources informatiques dématérialisées, mises à disposition d'un grand nombre d'utilisateurs qui y accèdent à distance et de manière évolutive dans le temps, c'est-à-dire à la demande. Une telle architecture est plus connue sous le nom d'architecture en « cloud computing », ou architecture « d'informatique dans le nuage ». Le concept de cloud computing désigne des architectures informatiques dans lesquelles des traitements informatiques traditionnellement localisés sur des postes clients d'utilisateurs d'une entreprise, ou sur des serveurs de l'entreprise sont déportés sur des serveurs distants.

Une architecture en cloud computing s'appuie sur une dématérialisation basée sur une virtualisation de ressources physiques. La virtualisation consiste à faire fonctionner sur un seul ordinateur, ou serveur hôte, plusieurs systèmes d'exploitation, comme s'ils fonctionnaient sur des ordinateurs distincts. Des environnements virtuels appelés machines virtuelles, sont ainsi offerts aux utilisateurs.

Des architectures en cloud computing sont proposées à des clients avec des garanties de service et de disponibilité négociées par contrat et moyennant une tarification adaptée aux ressources qui sont allouées. Dans le but de maximiser l'utilisation des capacités en ressources et par la même de maximiser la performance économique des offres de cloud computing, les ressources sont généralement sur-engagées. Ainsi, la quantité totale de ressources configurées pour l'ensemble des machines virtuelles présentes sur un serveur hôte est supérieure à celle réellement disponible sur cet hôte. En effet, on estime que la plupart du temps, chacune des machines virtuelles ne cherche pas à consommer la totalité des ressources configurées, ou en tout cas, pas au même moment que les autres machines virtuelles co-localisées sur le même serveur hôte.

Afin d'offrir aux clients à tout moment l'accès à des ressources conformément aux termes du contrat qu'ils ont négociés, des mécanismes de gestion de contention des ressources sont mis en place. Ils permettent d'équilibrer l'utilisation des ressources en temps réel sur un serveur hôte, voire sur un ensemble de serveurs hôtes.

Par exemple, lors d'une montée en charge d'une machine virtuelle hébergée par un serveur hôte qui, lors de cette montée en charge atteint sa limite de capacité, le besoin en ressources de cette machine virtuelle est évalué par rapport à d'autres machines virtuelles co-localisées sur le même serveur hôte afin de lui allouer des ressources supplémentaires. Une allocation de ressources supplémentaires peut alors consister à déplacer la machine virtuelle concernée vers un autre serveur hôte qui dispose de ressources suffisantes, ou à déplacer des machines localisées sur le même serveur hôte que cette machine virtuelle vers un autre serveur hôte afin qu'elle dispose de plus de ressources, ou encore à dupliquer la machine virtuelle sur plusieurs serveurs hôtes de manière à répondre aux besoins de ressources accrus.

Cependant, un tel mécanisme de gestion de contention des ressources, mis en œuvre pour faire face à une demande de ressources supplémentaires en provenance d'une machine virtuelle, peut impacter une ou plusieurs autres machines virtuelles. Ainsi, lorsqu'une machine virtuelle est migrée depuis un serveur hôte source vers un serveur hôte destination, la machine migrée peut souffrir d'une dégradation des performances pouvant varier en fonction de la charge du serveur hôte source et/ou du serveur hôte destination, en fonction de la charge de la machine virtuelle et de la nature des applications qu'elle exécute. Lors de la migration, la machine virtuelle peut, dans le pire des cas, souffrir d'une perte de connectivité ponctuelle inacceptable (le terme utilisé habituellement pour désigner cette perte de connectivité est le terme anglais « down time »).

La mise en œuvre d'un mécanisme de gestion des contentions au niveau d'une machine virtuelle pour satisfaire les besoins accrus en ressources d'une autre machine virtuelle peut donc avoir un impact non négligeable sur la machine virtuelle. Ce défaut d'isolation d'une machine virtuelle par rapport à des événements survenus au niveau d'une autre machine virtuelle constitue un nouveau type de vulnérabilité de sécurité. Des personnes malintentionnées peuvent ainsi exploiter ce défaut et provoquer intentionnellement des variations au niveau de la quantité de ressources consommée au niveau de premières machines virtuelles, afin de déclencher des mécanismes de gestion de contention des ressources produisant leurs effets au niveau d'autres machines virtuelles. Cela constitue une nouvelle forme d'attaque qui n'est pour l'instant pas traitée en tant que telle. En effet, la détection d'attaques s'intéresse généralement à un espace de ressources manipulé directement par un attaquant : l'attaquant manipule et attaque les ressources de cet espace et les méthodes connues de détection d'attaque ne s'intéressent qu'à cet espace de ressources. Ainsi, aucune attaque n'est détectée sur des machines qui ne font pas partie de cet espace. Avec ce nouveau type d'attaque, l'effet néfaste est obtenu en quelques sortes par effet de bord. Les mécanismes de détection d'attaques actuels sont inadaptés pour détecter et analyser ce nouveau type d'attaque. La demande de brevet FR 2 977 050 A1 divulgue un procédé de détection d'attaques et de protection d'un ensemble de machines virtuelles dans un système comprenant au moins un premier serveur hôte hébergeant ledit ensemble de machines virtuelles. Ce procédé comprend une étape de détection que la machine virtuelle est à l'origine d'un nombre de migrations de machines colocataires de ladite machine virtuelle supérieur à une valeur seuil pendant une période de temps déterminée.

Un des buts de l'invention est de remédier à des insuffisances/inconvénients de l'état de la technique et/ou d'y apporter des améliorations.

A cette fin, l'invention propose un procédé de détection d'attaques dans un système comprenant au moins deux serveurs hôtes, un serveur hôte étant destiné à héberger un ensemble de machines virtuelles, le procédé comprenant les étapes suivantes, mises en œuvre par une entité de détection du système :
- détection qu'un nombre de migrations de machines virtuelles d'un serveur du système à un autre pendant une période de temps courante, est supérieur à une valeur seuil,
- partitionnement de l'ensemble des machines virtuelles du système en un premier sous-ensemble de machines virtuelles, dit à profil stable en termes de consommation d'au moins une ressource, et en un deuxième sous-ensemble, dit à profil fluctuant, le partitionnement étant fonction d'un indice de fluctuation représentatif pour une machine de l'ensemble d'une variation de la consommation de la ressource sur une fenêtre temporelle, les machines du premier sous-ensemble ayant un indice de fluctuation plus faible que les machines du deuxième sous-ensemble,
- calcul, pour les couples de machines virtuelles du deuxième sous-ensemble, d'une valeur de corrélation temporelle entre les deux profils du couple,
- identification dans le deuxième sous-ensemble de machines virtuelles pour lesquelles la valeur de corrélation est supérieure ou égale à une valeur de corrélation seuil, lesdites machines étant identifiées comme à l'origine de l'attaque.

Le procédé de l'invention permet ainsi de détecter un nouveau type de vulnérabilité dans une architecture en cloud computing, plus précisément dans un système comprenant une grappe de serveurs hôtes appelée également « cluster ». Le nouveau type de vulnérabilité, lié à la dégradation des performances d'une machine virtuelle inhérente à la mise en œuvre de migrations de machines virtuelles d'un serveur hôte vers un autre, est exploité par un attaquant qui, après avoir pris le contrôle de plusieurs machines virtuelles, influe sur la consommation d'une ressource critique par ces machines dans le but de déclencher des migrations intempestives de machines virtuelles dans le système de serveurs hôtes. Ces migrations, habituellement mises en œuvre ponctuellement pour faire face à des montées en charge ponctuelles de consommation d'une ressource sont alors plus nombreuses que dans un cas de fonctionnement normal du système et provoquent une dégradation des performances de l'ensemble du système. En effet, les migrations ont un coût et impactent la bande passante qui est utilisée pour transmettre des informations relatives à la machine virtuelle migrée ; elles impactent également les consommations mémoire et processeur des serveurs hôtes source et destination lors de la migration.

Le procédé permet de détecter une attaque non détectable avec des moyens connus. En effet, d'une part la dégradation des performances n'est pas liée au comportement d'une seule machine qui pourrait alors être rapidement identifiée, mais est dépendante de son comportement et provoquée par des actions coordonnées de plusieurs machines virtuelles. L'observation de chacune de ces machines isolément ne permet donc pas de soupçonner une attaque et de lever une alerte de sécurité. D'autre part, la dégradation des performances n'est pas ressentie sur une ou plusieurs machines dont l'attaquant aurait pris le contrôle et qui serait sciemment l'objectif de l'attaque, mais sur des machines virtuelles non compromises qui subissent, par effet de bord, les préjudices d'une mise en œuvre d'un trop grand nombre de migrations dans le système de serveurs, ou cluster.

Le procédé de détection d'attaques permet par ailleurs d'identifier l'ensemble des machines virtuelles qui sont manipulées par l'attaquant pour perpétrer l'attaque. En effet, grâce au procédé, les machines virtuelles qui présentent un profil de consommation de ressource fluctuant et qui sont temporellement corrélées sont identifiées. On estime en effet que les migrations intempestives sont provoquées essentiellement par l'exécution de profils de consommation extrêmement fluctuants qui ont, de ce fait, un impact important sur la distribution de la charge des serveurs hôtes qui composent le système. L'identification des machines virtuelles à l'origine de l'attaque facilite la mise en place de mesures destinées à mettre fin à l'attaque.

Selon un exemple de réalisation, le procédé comprend une étape de calcul d'un vecteur de fluctuation représentatif, pour la machine virtuelle de l'ensemble, de l'indice de fluctuation calculé à des instants successifs par déplacement de la fenêtre temporelle d'un pas, ledit pas étant associé à un relevé de mesure de consommation de la ressource, ledit vecteur étant utilisé au cours de l'étape de partitionnement de l'ensemble des machines virtuelles.

Les étapes du procédé sont déclenchées lors de la détection d'une alerte. Afin de déterminer, parmi l'ensemble des machines virtuelles du système, celles dont le profil de consommation est fluctuant, un relevé régulier de consommation d'une ressource est effectué et un vecteur d'indices de fluctuation est construit en continu. Ce vecteur d'indices de fluctuation est représentatif d'une variation de la consommation d'une ressource sur une période donnée définie par la durée de la fenêtre temporelle. Une valeur de ce vecteur est calculée en faisant une différence pendant une période de temps égale à la fenêtre temporelle, entre les consommations maximale et minimale observées sur cette période. L'algorithme de partitionnement est appliqué à ce vecteur. Cela permet de mettre en œuvre une détection d'attaques en continu, sans pour autant nécessiter des capacités de calcul en continu.

Dans un exemple de réalisation de l'invention, la fenêtre temporelle est obtenue en calculant une moyenne entre des temps qui séparent deux migrations successives durant la période de temps courante.

La fenêtre temporelle est définie par la moyenne des durées qui séparent deux migrations successives durant la période de temps courante au cours de laquelle un nombre anormalement élevé de migrations a été détecté. Il est connu que la migration d'une machine virtuelle d'un serveur hôte source vers un serveur hôte destination peut être provoquée par un attaquant suite à une fluctuation, en termes de consommation d'une ressource, entre des valeurs extrêmes. En effet, une migration est liée à la recherche d'un équilibrage des taux d'occupation des ressources entre les serveurs hôtes au sein du cluster, sous certaines conditions de contention au niveau d'une ressource. Une fois la migration mise en œuvre, le taux d'occupation de la ressource au niveau des serveurs hôtes redevient équilibré. Ainsi, en fixant la fenêtre temporelle en fonction du temps moyen qui sépare deux migrations successives, on augmente les chances d'observer, durant une fenêtre temporelle, des valeurs extrêmes de consommation de la ressource. On augmente donc les chances d'avoir des valeurs de consommation clairement différenciées lors du calcul des indices de fluctuation. On limite ainsi le nombre de faux-positifs et de faux-négatifs, c'est-à-dire le nombre de profils stables, respectivement fluctuants, qui seraient partitionnés à tort dans le sous-ensemble des machines virtuelles à profil fluctuant, respectivement fluctuant.

Dans un exemple de réalisation, le partitionnement de l'ensemble des machines virtuelles est mis en œuvre au moyen de l'algorithme de partitionnement de données des k-moyennes.

L'algorithme des k-moyennes, est adapté au partitionnement des profils en deux groupes distincts lorsque k est fixé à 2. Cet algorithme est par ailleurs adapté au traitement de larges quantités de données (on parle habituellement de scalabilité). De plus, des implémentations en parallèle de cet algorithme peuvent aisément être mises en œuvre, ce qui le rend très adapté pour une utilisation sur des plateformes telles que les plateformes en cloud computing.

Dans un exemple de réalisation, la valeur de corrélation entre deux profils de consommation est calculée au moyen de l'algorithme d'analyse des corrélations canoniques.

L'algorithme d'analyse des corrélations canoniques (ou « CCA » pour « Canonical Correlation Algorithm » en anglais) est adapté à la détection d'une corrélation temporelle entre les profils de consommation des machines virtuelles qui font partie du sous-ensemble des machines virtuelles à profil de consommation fluctuant identifié au moyen de l'algorithme des k-moyennes. L'algorithme d'analyse des corrélations canoniques est capable de réduire des données brutes, telles qu'un taux de consommation mémoire, un taux de consommation CPU, à des données linéairement indépendantes. Cela permet la modélisation du comportement d'une machine virtuelle et le calcul de la corrélation sur les modèles extraits et non pas directement sur les données brutes. Cela rend cette technique robuste aux bruits introduits par l'environnement d'exécution des machines virtuelles.

Dans un exemple de réalisation, la ressource dont la consommation est mesurée est la mémoire, mesurée en pourcentage par rapport à la mémoire totale allouée.

Le calcul des corrélations temporelles est basé sur l'observation de la consommation du temps processeur par les différentes machines virtuelles du système. Cette métrique est intéressante car très représentative de ce qui peut influer le besoin en migrations de machines virtuelles à l'intérieur du système. Par ailleurs, cette métrique est représentative d'une consommation temps réel par les machines virtuelles. Le procédé, appliqué à la consommation de la CPU, fournit donc des résultats très fiables.

Dans un autre exemple de réalisation, la ressource dont la consommation est mesurée est le microprocesseur, mesurée en pourcentage de temps d'utilisation.

Dans cet exemple, la métrique utilisée par le procédé correspond à la consommation de la mémoire par les différentes machines virtuelles du système. Cette métrique est également très représentative de ce qui peut influer le besoin en migrations de machines virtuelles à l'intérieur d'un système.

Dans un exemple de réalisation, le procédé comprend, lorsqu'au moins deux machines virtuelles qui s'exécutent sur un même serveur hôte font partie des machines virtuelles à l'origine de l'attaque, une étape de définition d'une règle d'exclusion destinée à interdire, lors d'une migration ultérieure que les deux machines virtuelles s'exécutent sur le même serveur hôte.

Le procédé de détection contribue à la mise en place de contre-mesures destinées à remédier à l'attaque détectée en définissant, à partir du contexte de l'attaque, une ou plusieurs règles sur le placement des machines virtuelles sur les différents serveurs hôtes lors de migrations suivantes. De telles mesures sont destinées à réduire les capacités de l'attaquant à nuire en empêchant des configurations propices au déclenchement d'une attaque.

L'invention concerne également une entité de détection d'attaque résidant dans une couche virtuelle d'un serveur hôte et comprise dans un système comprenant au moins deux serveurs hôtes, un serveur hôte étant destiné à héberger un ensemble de machines virtuelles, l'entité de détection comprenant :
- des moyens de détection, agencés pour détecter qu'un nombre de migrations de machines virtuelles d'un serveur du système à un autre pendant une période de temps courante, est supérieur à une valeur seuil,
- des moyens de partitionnement, agencés pour partitionner l'ensemble des machines virtuelles du système en un premier sous-ensemble de machines virtuelles, dit à profil stable en termes de consommation d'au moins une ressource, et en un deuxième sous-ensemble, dit à profil fluctuant, le partitionnement étant fonction d'un indice de fluctuation représentatif pour une machine de l'ensemble d'une variation de la consommation de la ressource sur une fenêtre temporelle, les machines du premier sous-ensemble ayant un indice de fluctuation plus faible que les machines du deuxième sous-ensemble,

- des moyens de calcul, agencés pour calculer, pour les couples de machines virtuelles du deuxième sous-ensemble, une valeur de corrélation temporelle entre les deux profils du couple,
- des moyens d'identification, agencés pour identifier des machines virtuelles dans le deuxième sous-ensemble pour lesquelles la valeur de corrélation est supérieure ou égale à une valeur de corrélation seuil, lesdites machines étant identifiées comme étant à l'origine de l'attaque.

L'invention porte aussi sur un système de détection d'attaques comprenant :
- une grappe de serveurs comprenant au moins deux serveurs hôtes, un serveur hôte hébergeant un ensemble de machines virtuelles, et
- un serveur hôte de détection hébergeant une entité de détection selon l'invention.

L'invention concerne également un programme d'ordinateur sur un support de données et chargeable dans la mémoire d'un ordinateur, le programme comprenant des instructions pour l'exécution des étapes du procédé de détection d'attaques selon l'invention lorsque le programme est exécuté sur ledit ordinateur.

L'invention concerne également un support de données dans lequel est enregistré le programme selon l'invention.

D'autres caractéristiques et avantages de la présente invention seront mieux compris de la description et des dessins annexés parmi lesquels :
- la figure 1 est une représentation schématique d'une infrastructure dans le nuage dans laquelle un procédé de détection d'attaques est mis en œuvre, selon un exemple de réalisation de l'invention ;
- la figure 2 présente les étapes du procédé de détection d'attaques dans un environnement en cloud computing, selon un exemple de réalisation de l'invention ;
- la figure 3A, respectivement 3B, constitue une représentation schématique du calcul d'un vecteur d'indices de fluctuation pour une machine virtuelle à profil de consommation stable, respectivement à profil de consommation fluctuant, selon un exemple de réalisation de l'invention ;
- la figure 4 est une représentation schématique d'une entité de détection d'attaques, selon un exemple de réalisation de l'invention.

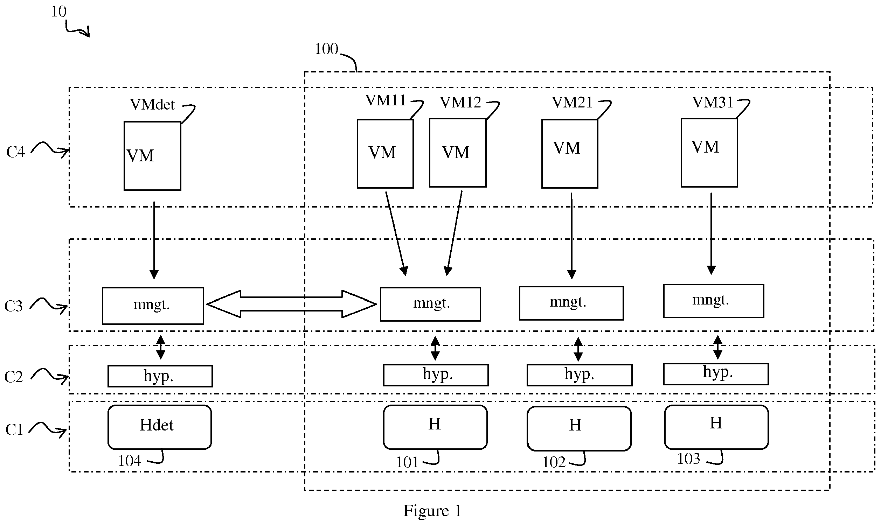

Un modèle d'architecture adapté pour la mise en œuvre d'un procédé de détection d'attaques, selon un premier exemple de réalisation va maintenant être décrit en relation avec la figure 1.

Une infrastructure d'informatique dans le nuage 10 (on parle habituellement d'infrastructure en « cloud computing ») comprend un ensemble de serveurs hôtes 101, 102, 103 organisés en une grappe 100 de serveurs (le terme habituellement utilisé pour désigner cet ensemble est le terme anglais « cluster » 100). Chaque serveur hôte 101, 102, 103 du cluster 100 est adapté pour héberger une ou plusieurs machines virtuelles VM11, VM12, VM21, VM31.. L'infrastructure 10 comprend également un serveur hôte de détection 104, adapté pour héberger au moins une entité de détection d'attaque VMdet. L'entité de détection VMdet est une machine virtuelle qui comprend des instructions de code pour mettre en œuvre les étapes d'un procédé de détection d'attaques à l'intérieur du cluster 100.

De manière connue, une architecture d'informatique dans le nuage telle que l'infrastructure 10 représentée sur la figure 1 est conforme à un modèle qui comprend plusieurs couches d'exécution. Différents modèles existent. Dans l'exemple décrit ici, l'infrastructure 10 repose ainsi sur une première couche d'exécution, ou couche d'exécution matérielle C1. Cette couche d'exécution matérielle C1 comprend un ensemble de ressources matérielles des serveurs hôte 101, 102, 103, 104. Une ressource matérielle correspond par exemple à de la mémoire, à un micro-processeur, à une interface réseau, etc. Une deuxième couche d'exécution est une couche de virtualisation C2. La couche de virtualisation C2 est adaptée pour présenter à des systèmes d'exploitation des machines virtuelles VM11, VM22, VM12, VM13, VMdet, d'une couche virtuelle C4, un espace de ressources virtuelles, construit à partir de l'espace des ressources physiques des serveurs hôtes 101, 102, 103, 104 de la couche d'exécution matérielle C1. La couche de virtualisation C2 est mise en œuvre par des hyperviseurs qui gèrent l'allocation des ressources physiques des serveurs hôtes entre différentes instances de machines virtuelles. Une troisième couche d'exécution est une couche de gestion C3 de l'architecture. La couche de gestion C3 est adaptée pour la création, l'instanciation, la libération, le placement des machines virtuelles VM11, VM12, VM21, VM31, VMdet exécutées sur les serveurs hôtes 101, 102, 103, 104. La couche de gestion C3 représente une interface entre la couche de virtualisation C2 et d'autres entités telles que la couche virtuelle C4, des outils de supervision de l'architecture, etc. Ainsi, c'est à travers la couche de gestion C3 que l'entité de détection VMdet interagit avec le cluster 100 et supervise le fonctionnement de l'ensemble des machines virtuelles du cluster 100. La machine virtuelle VMdet, en tant qu'entité de détection, possède des privilèges que ne possèdent pas les machines virtuelles du cluster 100 et qui lui permettent d'obtenir des informations relatives au fonctionnement de l'ensemble des machines virtuelles du cluster 100. L'entité de détection VMdet est ainsi adaptée pour obtenir des mesures sur la consommation des ressources mises à disposition des machines virtuelles VM11, VM12, VM21, VM31 par les serveurs hôtes 101, 102, 103. Elle est également adaptée pour obtenir des informations relatives à des mécanismes de gestion des ressources mises en œuvre dans le cluster 100 pour équilibrer l'utilisation des ressources en temps réel sur les serveurs hôtes du cluster 100. De tels mécanismes de gestion des ressources sont destinés à garantir à tout moment l'accès des machines virtuelles VM11, VM12, VM21, VM31 à des ressources du cluster 100 conformément aux termes d'un contrat que les utilisateurs de ces machines virtuelles ont négocié avec un fournisseur de l'infrastructure, par exemple un opérateur. Une telle gestion des contentions est nécessaire car il est habituel que dans des infrastructures en cloud computing, la quantité totale des ressources configurées pour un ensemble des machines virtuelles présentes dans un cluster soit supérieure à celle réellement mises à disposition par les serveurs hôtes de ce cluster. En effet, on estime que la plupart du temps, chacune des machines virtuelles ne cherche pas à consommer la totalité des ressources configurées, ou en tout cas, pas au même moment que les autres machines virtuelles du cluster. Un tel mécanisme de gestion des contentions peut consister à migrer une machine virtuelle d'un serveur hôte à un autre à l'intérieur du cluster 100 afin d'équilibrer la charge entre serveurs hôtes. Un état d'équilibre de la charge garantit un état de moindre contention au niveau de chaque serveur du cluster 100.

Dans cet exemple de réalisation, l'entité de détection VMdet est adaptée pour observer et comptabiliser le nombre de migrations de machines virtuelles d'un serveur hôte du cluster 100 vers un autre serveur hôte du cluster 100.

Enfin, une quatrième couche d'exécution est la couche virtuelle C4. Les ressources associées à cette couche sont les machines virtuelles VM11, VM12, VM21, VM13, VMdet qui s'exécutent dans les environnements virtuels mis à disposition par les serveurs hôtes 101, 102, 103, 104 en tant que machines physiques. Les machines virtuelles sont par exemple des machines virtuelles utilisateurs qui peuvent comprendre des données ou du code sensibles à protéger. Elles peuvent également être des machines virtuelles de sécurité, telle que l'entité de détection VMdet dédiée à la sécurité et destinée à protéger les machines virtuelles utilisateurs.

Trois serveurs hôtes et quatre machines virtuelles sont représentés dans le cluster 100. Bien sûr, l'invention n'est pas limitée à cette configuration et s'applique à des clusters de configuration différente en termes de nombre de serveurs hôtes et de machines virtuelles hébergées par ces serveurs.

L'entité de détection VMdet est décrite ici comme machine virtuelle hébergée par un serveur hôte 104 qui ne fait pas partie intégrante du cluster 100. Ainsi, l'entité de détection VMdet n'utilise que des ressources physiques proposées par le serveur hôte de détection 104. L'invention n'est pas limitée à cet exemple de réalisation et d'autres architectures sont possibles. Dans un autre exemple de réalisation, l'entité de détection VMdet fait partie du cluster 100. Dans tous les cas, la machine virtuelle de détection d'attaques VMdet possède des privilèges particuliers qui lui permettent de superviser le fonctionnement des autres machines virtuelles de l'architecture et d'avoir une vision globale des événements qui surviennent dans le cluster 100. Cette supervision se fait par exemple via la couche de gestion C3 qui a une vision de l'ensemble des hyperviseurs de la couche de virtualisation C2.

Dans un autre exemple de réalisation, l'infrastructure 10 comprend également un outil de supervision connu, par exemple VMWare®, apte à superviser le fonctionnement des machines virtuelles du cluster 100. L'entité de détection VMdet obtient alors des informations relatives à la supervision des machines virtuelles du cluster 100 de cet outil de supervision. Dans cet exemple, l'outil de supervision comptabilise les migrations à l'intérieur du cluster, fait des mesures régulières de consommation des ressources par les machines virtuelles du cluster 100, etc. Ces informations sont alors accédées et utilisées par l'entité de détection VMdet pour la mise en œuvre du procédé de détection d'attaques.

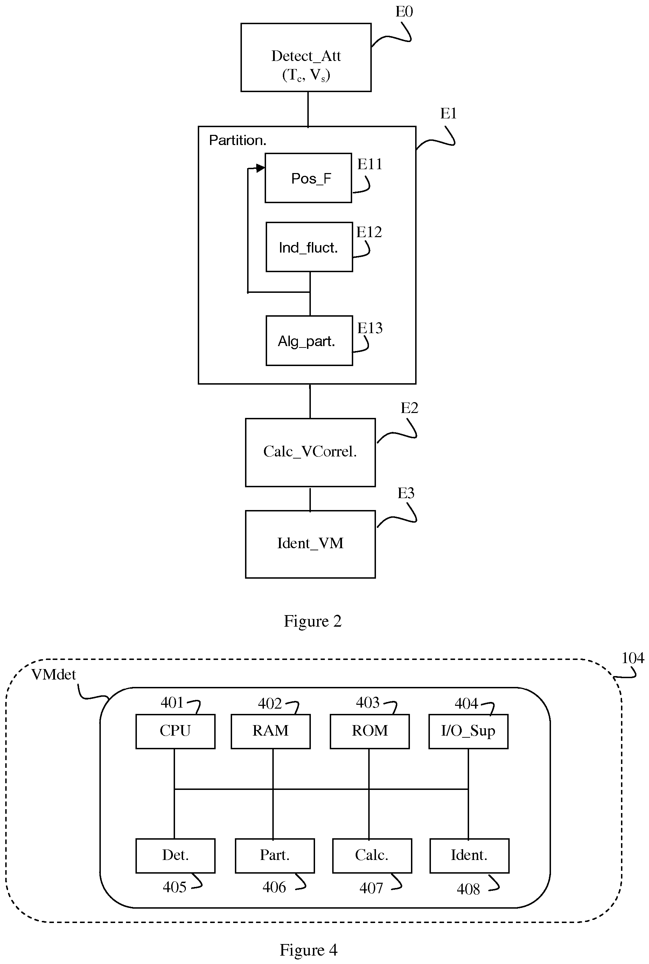

Les étapes d'un procédé de détection d'attaques, selon un premier exemple de réalisation, vont maintenant être décrites en relation avec la figure 2.

Le procédé est exécuté dans un environnement conforme à l'architecture décrite en relation avec la figure 1. Dans une phase préalable (non représentée sur la figure 2), des machines virtuelles VM11, VM12, VM21, VM31, ainsi qu'une entité de détection VMdet, apte à mettre en œuvre les étapes du procédé décrit ci-dessous ont été créées et instanciées. L'entité de détection VMdet supervise, en termes de sécurité l'ensemble des machines virtuelles du cluster au travers de la couche de gestion C3. Plus précisément, elle a une visibilité sur l'ensemble des machines virtuelles qui font partie du cluster 100. Elle est notamment adaptée pour obtenir des informations quant à l'utilisation par chacune des machines virtuelles des ressources physiques des serveurs hôtes du cluster 100. Elle est également adaptée pour obtenir des informations quant à la mise en œuvre de mécanismes de gestion dynamique des ressources à l'intérieur du cluster. La gestion dynamique des ressources comprend la gestion des contentions et l'équilibrage de charge au niveau du cluster 100.

Dans une étape E0 de détection, la machine virtuelle de détection VMdet détecte que le nombre de migrations de machines virtuelles d'un serveur hôte à un autre à l'intérieur du cluster 100 pendant une période de temps courante T_{c} dépasse une valeur seuil Vₛ préalablement calculée sur une période de référence . Par exemple, la période de référence est d'une heure, ou d'une journée. La valeur seuil Vₛ correspond à un nombre de migrations par période de temps qui est considéré comme normal dans un état de fonctionnement normal du cluster 100. Cette valeur seuil Vₛ a été déterminée par exemple de manière empirique en observant le fonctionnement du cluster 100 et plus précisément les migrations opérées dans le cluster 100 sur une ou plusieurs périodes de référence, et en faisant par exemple une moyenne à partir de ces observations. On suppose ici que le nombre de migrations comptabilisé sur la période courante de temps T_{c} de même durée que la période de référence est supérieur à la valeur seuil Vₛ. La détection d'un nombre de migrations supérieur à la valeur seuil Vₛ pendant la période courante T_{c} est assimilée à une attaque en cours. En effet, il est connu que la migration de machines virtuelles consomme des ressources au niveau de l'infrastructure et peut provoquer une dégradation des performances au niveau des machines virtuelles migrées. Lors d'une telle migration, une machine virtuelle peut, dans le pire des cas, souffrir d'une perte de connectivité ponctuelle inacceptable (le terme utilisé habituellement pour désigner cette perte de connectivité est le terme anglais « down time »). Ainsi, on suppose que lorsque le nombre de migrations de machines virtuelles à l'intérieur d'un cluster est anormalement élevé, alors une attaque est possiblement en cours, menée par une personne malintentionnée qui a pris le contrôle de machines virtuelles et qui a réussi à les coordonner de manière à déclencher des migrations intempestives dans le but de dégrader les performances de l'architecture.

Dans une étape E1 de partitionnement des machines virtuelles, l'entité de détection VMdet procède à une analyse des profils de consommation des ressources des machines virtuelles en partitionnant les machines virtuelles du cluster 100 en deux sous-ensembles disjoints : un premier sous-ensemble, destiné à regrouper les machines virtuelles dont le profil est stable en termes de consommation des ressources du cluster 100, plus précisément des serveurs hôtes 101, 102, 103 du cluster 100. Un deuxième sous-ensemble est destiné à regrouper les machines virtuelles dont le profil est fluctuant en termes de consommation des ressources.

Une machine virtuelle possède un profil de consommation stable si la mesure de la consommation d'une ou de plusieurs ressources sur une période de temps donné est relativement constante. Au contraire, si la mesure de consommation d'une ressource sur la période de temps donné présente des valeurs erratiques, alors le profil associé à la machine virtuelle est jugé fluctuant. Plus précisément, il est mis en œuvre une méthode statistique d'analyse de données afin d'obtenir automatiquement ce partitionnement. Dans cet exemple de réalisation, l'algorithme de partitionnement des k-moyennes (ou « k-means » en anglais) est utilisé. Le but de cet algorithme est de classer les machines virtuelles en fonction de la fluctuation de leur consommation de ressource dans deux sous-ensembles distincts : un sous-ensemble de machines virtuelles à profil stable et un sous-ensemble de machines virtuelles à profil fluctuant. L'algorithme divise des observations en k-partitions de telle sorte que les écarts de ces observations à la moyenne des observations de chaque partition, soient, au total, minimum et les distances des centres des partitions soient les plus éloignés possibles les uns des autres.

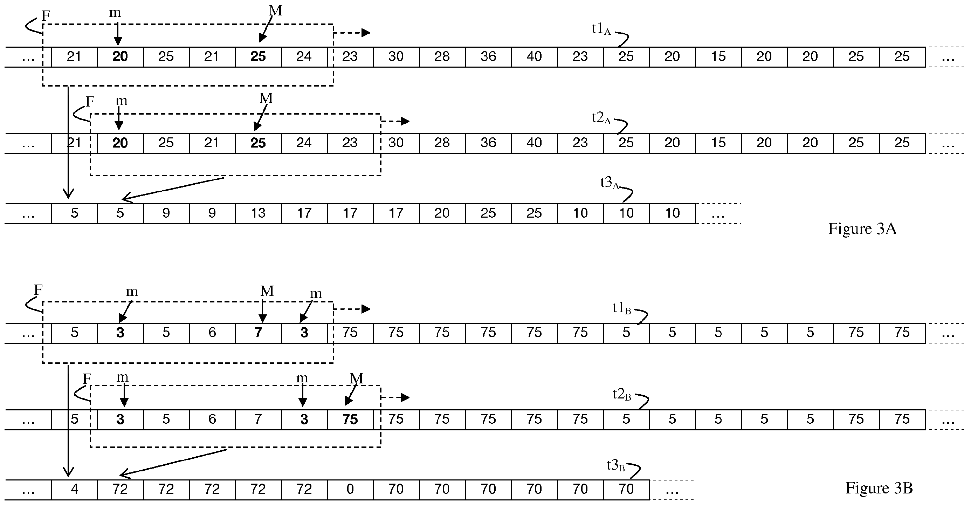

La valeur« k », correspondant au nombre de partitions souhaité est donc ici fixée à 2. L'algorithme de partitionnement des k-moyennes analyse les observations sur une métrique représentative d'un phénomène que l'on cherche à partitionner. Dans la présente invention, pour appliquer l'algorithme de partitionnement des k-moyennes, on définit une métrique appelée «indice de fluctuation» auquel l'algorithme des k-moyennes est appliqué. L'indice de fluctuation, calculé pour une machine virtuelle sur une fenêtre de temps donnée, mesure la fluctuation de la consommation d'une ressource par cette machine pendant cette période donnée. L'indice de fluctuation est calculé sur cette fenêtre de temps en faisant la différence entre les valeurs maximale et minimale de consommation de la ressource observées dans la fenêtre de temps considérée. Dans cet exemple de réalisation, l'indice de fluctuation est mesuré par rapport à une consommation mémoire d'une machine virtuelle. La consommation mémoire est elle-même indiquée en pourcentage de la capacité globale des ressources mémoire mises à disposition de la machine virtuelle par le cluster 100. En calculant cet indice de fluctuation sur des fenêtres de temps successives, on obtient un ensemble de valeurs d'indice de fluctuation appelé « vecteur d'indices de fluctuation ». Un exemple de construction du vecteur d'indices de fluctuation pour une machine virtuelle à profil stable de consommation, respectivement fluctuant, tel que détaillé au moyen de la description de sous-étapes E11, E12 et E13 de l'étape E1 de partitionnement, est illustré au moyen de la figure 3A, respectivement 3B.

Pour chaque machine virtuelle du cluster, il est effectué une mesure régulière de la consommation d'une ressource donnée. La mesure est par exemple effectuée toutes les 20 secondes. Cela correspond à la durée entre deux prises de mesures successives, ou « pas », qui sépare deux mesures, observées par l'entité de détection VMdet. Sur les figures 3A et 3B, les mesures qui figurent dans les tables à *1* ligne et *n* colonnes (ou *1 x n*) t1_{A}, t1_{B} correspondent à la consommation mémoire de deux machines virtuelles distinctes du cluster 100, par exemple, les machines virtuelles VM11 et VM31.

Il est défini par ailleurs une fenêtre temporelle F à l'intérieur de laquelle il est calculé la différence entre les valeurs maximale *M* et minimale *m* de consommations présentes dans la fenêtre temporelle F ; cette différence correspond à l'indice de fluctuation précédemment défini. La fenêtre temporelle F est définie par rapport à la durée qui sépare deux migrations successives dans le cluster 100. Plus précisément, la fenêtre temporelle F est une valeur moyenne de la durée qui sépare deux migrations observées pendant la période de référence, c'est-à-dire pendant une période de fonctionnement normal du cluster 100. En choisissant la durée de la fenêtre temporelle F en fonction de la moyenne des durées qui sépare les migrations successives, on augmente les chances d'avoir des valeurs de consommation nettement différenciées à l'intérieur d'une fenêtre, illustrant des variations de consommation que l'on souhaite observer. Ainsi, le nombre de faux-positifs et de faux-négatifs est limité et l'efficacité du procédé optimisée.

Dans une sous-étape E11 de l'étape E1 de partitionnement, la fenêtre temporelle F est positionnée sur une première position. Ce positionnement de la fenêtre glissante F pour la machine virtuelle VM11 est illustré sur la figure 3A au niveau de la table t1_{A} et au niveau de la table t1_{B} pour la machine virtuelle VM31.

Dans une sous-étape E12 de calcul de l'indice de fluctuation, il est calculé la différence entre la valeur maximale *M* et la valeur minimale m de consommation de la ressource figurant dans la fenêtre temporelle F. En référence aux figures 3A et 3B, il est donc calculé 25 - 20 pour la machine virtuelle VM11, et 7 - 3 pour la machine virtuelle VM31. La différence obtenue pour les machines virtuelles VM11 et VM31 est inscrite dans des tables t3_{A} et t3_{B}, qui constituent le vecteur d'indices de fluctuation des machines virtuelles.

Les sous-étapes E11 et E12 sont ensuite réitérées. La fenêtre temporelle F est déplacée à une position suivante, telle qu'illustrée au niveau des tables t2_{A} et t2_{B}. L'indice de fluctuation est calculé pour cette position suivante de la fenêtre de temps glissante F.

Les tables résultantes t3_{A} et t3_{B} obtenues constituent les vecteurs d'indices de fluctuation des machines virtuelles VM11 et VM31. Ils comprennent les indices de fluctuation calculés à intervalle régulier, c'est-à-dire à chaque déplacement de la fenêtre de temps glissante F.

Les machines virtuelles à profil fluctuant de consommation produisent un vecteur d'indices de fluctuation qui présente davantage de valeurs élevées en comparaison à des machines virtuelles à profil de consommation stable. En effet, la différence entre la valeur maximale *M* et la valeur minimale *m* de consommation sur une période égale à la fenêtre temporelle F est fréquemment plus élevée pour une machine virtuelle à profil de consommation fluctuant que pour une machine virtuelle à profil de consommation stable. Ainsi, on peut conclure des tables t3_{A} et t3_{B} des figures 3A et 3B que la machine virtuelle VM11 présente un profil de consommation stable alors que la machine virtuelle VM31 présente un profil de consommation fluctuant.

Dans une sous-étape E13 d'application de l'algorithme de partitionnement, il est appliqué l'algorithme des k-moyennes aux vecteurs d'indices de fluctuation calculés précédemment. Les machines virtuelles du cluster sont alors réparties dans deux sous-ensembles distincts : un premier sous-ensemble de machines virtuelles à profil de consommation stable et un deuxième sous-ensemble de machines à profil de consommation fluctuant. La méthode des k-moyennes est telle que le profil de consommation d'une machine virtuelle appartient soit au premier sous-ensemble, soit au deuxième sous-ensemble, sans ambiguïté.

Dans une étape suivante E2 de calcul d'une valeur de corrélation, il est appliqué un algorithme d'analyse statistique aux valeurs de consommation mémoire des machines virtuelles qui appartiennent au sous-ensemble des machines virtuelles à profil fluctuant, prises deux à deux. En d'autres termes, pour chaque couple de machines virtuelles identifiée comme appartenant au sous-ensemble des machines à profil fluctuant, il est appliqué l'algorithme d'analyse statistique aux valeurs de consommation mémoire relevées pour ces deux machines virtuelles. L'application de cet algorithme est destinée à identifier parmi les profils des machines virtuelles, ceux qui sont exagérément corrélés. En d'autres termes, l'algorithme est appliqué à des couples de machines virtuelles, prises deux à deux.

On estime en effet qu'un attaquant doit contrôler plusieurs machines virtuelles afin de jouer sur leur profil de consommation corrélativement de manière à avoir suffisamment d'influence sur le déséquilibre de la charge au sein du cluster. Ainsi, il peut influencer les décisions de migration de machines virtuelles au sein du cluster. L'identification des machines virtuelles à l'origine de l'attaque ne concerne donc que les machines à profil de consommation fluctuant et consiste à identifier une corrélation temporelle entre ces machines. Afin de mettre en œuvre cette étape E2 d'identification des machines virtuelles corrélées, on applique par exemple l'algorithme d'analyse des corrélations canoniques (plus connu sous son nom anglais « Canonical Correlation Analysis », ou « CCA »). Le but de l'analyse des corrélations canoniques est de comparer des groupes de variables deux à deux afin de déterminer s'ils décrivent un même phénomène. Ainsi, l'algorithme est appliqué aux valeurs de consommation mémoire des machines virtuelles, prises deux à deux et il est calculé une matrice de corrélation *n x n* qui comprend en i-ème ligne et en j-ième colonne une valeur de corrélation entre les valeurs de consommation mémoire associées à une i-ème machine virtuelle à profil de consommation fluctuant et les valeurs de consommation mémoire associées à une j-ième machine virtuelle à profil de consommation fluctuant. Cette valeur est représentative de la corrélation temporelle entre la i-ème machine virtuelle et la j-ième machine virtuelle du deuxième sous-ensemble.

Dans une étape E3 d'identification, il est identifié dans le sous-ensemble des machines virtuelles à profil de consommation fluctuant, celles qui sont à l'origine de l'attaque. A cet effet, les valeurs de corrélation calculées précédemment sont comparées à une valeur seuil de corrélation au-dessus duquel il est estimé que les machines sont anormalement corrélées. Ainsi, si une valeur de corrélation calculée pour deux machines virtuelles du sous-ensemble des machines virtuelles à profil fluctuant est supérieure ou égale à la valeur seuil de corrélation, alors les deux machines virtuelles sont anormalement corrélées et considérées comme faisant très probablement partie des machines virtuelles à l'origine de l'attaque. Dans cet exemple de réalisation la valeur seuil de corrélation est fixée à 0,8. Cette valeur a été fixée de manière empirique. La valeur seuil tient compte du fait que des machines virtuelles attaquantes ne peuvent pas ne pas être corrélées et tient compte du fait que les indices de fluctuation qui sont calculés sur la consommation mémoire présentent une forte corrélation en cas de coordination de profils de consommation pour mener l'attaque.

L'étape E2 permet ainsi d'identifier des machines virtuelles anormalement corrélées. Ces machines sont identifiées comme étant à l'origine de l'attaque.

Avec le procédé de détection décrit ici, on identifie d'abord les machines qui ont un profil de consommation de ressource fluctuant, et parmi ces machines, celles qui fluctuent de manière coordonnée, plus précisément, celles dont la fluctuation est corrélée. Ainsi, on détermine un ensemble de machines virtuelles liées entre elles au niveau de leur comportement représenté par leur consommation de ressources. On estime que ces machines sont à l'origine de l'alerte générée par un nombre anormal de migrations de machines virtuelles.

La valeur de la fenêtre temporelle F est auto-adaptative, dans le sens où elle est recalculée en fonction de l'évolution dans le temps du nombre de migrations de machines virtuelles.

Les étapes du procédé sont déclenchées lors de la détection d'un nombre trop important de migrations et certaines des étapes mises en œuvre sur un historique de consommation passé. En effet, l'attaque est détectée lorsque le nombre de migrations de machines virtuelles à l'intérieur du cluster 100 dépasse la valeur seuil Vₛ. A cet instant, l'attaque a déjà eu lieu, puisque de trop nombreuses migrations intempestives ont été observées. Il convient donc d'analyser ce qui a conduit à cette attaque. Les étapes E1 de partitionnement et E2 de calcul d'une valeur de corrélation sont ainsi mises en œuvre à partir des consommations de ressources observées avant la détection de l'attaque et plus précisément durant une période d'analyse T_{A} supérieure à la période de temps courante Tc et antérieure à la détection de l'attaque. La période d'analyse T_{A} peut être calculée comme :
*T_{A}* = *T_{c}* + *Δₜ,* où Δ*ₜ* représente une durée supplémentaire, destinée à prendre en compte des prémices de l'attaque. Par exemple, Δ*ₜ* est fixé à 1 heure.

Dans l'exemple de réalisation décrit ici, les mesures de consommation de ressource et les vecteurs d'indices de fluctuation sont relatifs à la ressource mémoire. Dans un autre exemple de réalisation, la ressource dont la consommation est mesurée et qui sert de base au calcul de l'indice de fluctuation est un taux d'utilisation de la ressource microprocesseur, ou « CPU » (de l'anglais « Control Processing Unit ») mise à disposition des machines virtuelles et mesurée en pourcentage du temps d'utilisation. Dans le cas de la ressource CPU, un exemple de valeur seuil de corrélation Vₛ est également de 0,8. En effet, dans le cas de la CPU, les indices de fluctuation présentent également une forte corrélation.

Le procédé permet ainsi d'identifier des machines virtuelles dont la consommation de ressources est fortement corrélée. Cette corrélation est à l'origine de migrations intempestives de machines virtuelles à l'intérieur de l'infrastructure 10 qui provoquent une dégradation des performances. Ces machines virtuelles sont identifiées comme participant très probablement à une attaque. Une fois ces machines virtuelles identifiées, des contre-mesures sont mises en place afin de pallier l'attaque. Dans un exemple de réalisation, ces contre-mesures consistent à introduire des contraintes quant au placement de ces machines virtuelles sur les serveurs hôtes 101, 102, 103 du cluster 100 de manière à interdire certaines configurations. Par exemple, si les deux machines virtuelles VM11 et VM12 ont été identifiées comme fortement corrélées lors de la mise en œuvre du procédé de détection d'attaques décrit précédemment, et si ces deux machines virtuelles s'exécutent sur le même serveur, alors une contrainte est définie de manière à exclure ultérieurement une colocalisation de ces deux machines virtuelles sur un même serveur hôte. La contrainte est définie par exemple par la machine virtuelle de détection VMdet et prise en compte par un algorithme de gestion dynamique des ressources agencé pour migrer une machine virtuelle d'un serveur hôte à un autre. Ainsi, lorsqu'il est décidé d'une migration suivante, la contrainte est prise en compte et si les machines virtuelles VM11 et VM12 sont concernées par cette migration, elles sont séparées, c'est-à-dire placées sur des serveurs hôtes distincts. En recommandant une exclusion mutuelle de ces machines virtuelles, on réduit les capacités de l'attaquant à influer sur la consommation des ressources de ces machines virtuelles.

Une entité de détection d'attaques VMdet mise en œuvre dans un serveur de détection (104), selon un exemple de réalisation de l'invention va maintenant être décrite en relation avec la figure 4.

L'entité de détection VMdet est conforme à une architecture d'équipement informatique tel qu'un terminal ou un serveur. Selon le modèle d'architecture décrit en relation avec la figure 1, l'entité de détection d'attaques VMdet est une machine virtuelle qui réside dans la couche virtuelle du serveur hôte de détection 104 (le serveur hôte n'est pas représenté sur la figure 4). Elle comprend de manière classique :
- un microprocesseur 401, ou « CPU » (de l'anglais «Central Processing Unit »), destiné à charger des instructions en mémoire, à les exécuter, à effectuer des opérations ;
- un ensemble de mémoires, dont une mémoire volatile 402, ou « RAM » (pour « Random Access Memory ») utilisée pour exécuter des instructions de code, stocker des variables, etc., une mémoire de stockage 403 de type « ROM » ou « EEPROM » (de l'anglais « Read Only Memory » et « Electronically-Erasable Programmable Read-Only Memory). La mémoire de stockage 403 est agencée pour mémoriser une application qui comprend des instructions de code pour mettre en œuvre les étapes du procédé de détection d'attaques dans un système, tel que décrit en relation avec la figure 2 ;
- une interface de supervision 404, agencée pour superviser, à travers la couche de gestion C3 le fonctionnement du cluster et celui des machines virtuelles du cluster 100. En particulier l'interface de supervision 404 est agencée pour obtenir des mesures régulières, pour chaque machine virtuelle du cluster, de la consommation des ressources mises à disposition des serveurs hôtes du cluster. Elle est également agencée pour obtenir des informations quant aux migrations de machines virtuelles d'un serveur hôte à un autre à l'intérieur du cluster 100.

On comprend, au vu de la description du modèle d'architecture en cloud computing fourni en relation avec la figure 1 que les ressources que possède l'entité de détection VMdet, telles que la CPU, la mémoire sont des ressources physiques du serveur hôte de détection 104 qui sont virtualisées et mises à disposition de l'entité de détection VMdet.

L'entité de détection VMdet comprend également :
- des moyens de détection 405, agencés pour détecter qu'un nombre de migrations de machines virtuelles d'un serveur à un autre à l'intérieur du cluster pendant une période de temps courante, est supérieur à une valeur seuil. Les moyens de détection 405 sont agencés pour mettre en œuvre l'étape E0 de détection du procédé de détection d'attaques décrit précédemment ;
- des moyens de partitionnement 406, agencés pour partitionner l'ensemble des machines virtuelles du système en un premier sous-ensemble de machines virtuelles, dit à profil stable en termes de consommation d'au moins une ressource, et en un deuxième sous-ensemble, dit à profil fluctuant, le partitionnement étant fonction d'un indice de fluctuation représentatif pour une machine de l'ensemble d'une variation de la consommation de la ressource sur une fenêtre temporelle F, les machines du premier sous-ensemble ayant un indice de fluctuation plus faible que les machines du deuxième sous-ensemble. Les moyens de partitionnement 406 sont agencés pour mettre en œuvre l'étape E1 de partitionnement du procédé de détection décrit précédemment ;
- des moyens de calcul 407, agencés pour calculer, pour les couples de machines virtuelles du deuxième sous-ensemble, une valeur de corrélation temporelle entre les deux profils du couple. Les moyens de calcul 407 sont agencés pour mettre en œuvre l'étape E2 de calcul d'une valeur de corrélation du procédé décrit précédemment ;
- des moyens d'identification 408, agencés pour identifier des machines virtuelles dans le deuxième sous-ensemble pour lesquelles la valeur de corrélation est supérieure ou égale à une valeur de corrélation seuil, lesdites machines identifiées étant identifiées comme à l'origine de l'attaque. Les moyens d'identification 408 sont agencés pour mettre en œuvre l'étape E3 d'identification du procédé décrit précédemment.

L'interface de supervision 404, les moyens de détection 405, les moyens de partitionnement 406, les moyens de calcul 407 et les moyens d'identification 408 sont de préférence des modules logiciels comprenant des instructions logicielles pour faire exécuter les étapes du procédé de détection d'attaques précédemment décrit.

Dans un exemple de réalisation, l'entité de détection VMdet comprend également des moyens de définition de règles d'exclusion (non représentés sur la figure 4), agencés pour définir des règles d'exclusion destinées à interdire que deux machines virtuelles qui s'exécutent sur le même serveur hôte et qui ont été identifiées comme faisant partie des machines virtuelles à l'origine de l'attaque soient migrées, lors d'une migration ultérieure, sur un même serveur hôte.

L'invention concerne donc aussi :
- un programme d'ordinateur comportant des instructions pour la mise en œuvre du procédé de détection d'attaques tel que décrit précédemment lorsque ce programme est exécuté par un processeur de l'entité de détection VMdet,
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

L'invention porte également sur un système 10 de détection d'attaques qui comprend une grappe de serveurs 100 comprenant au moins deux serveurs hôtes, un serveur hôte hébergeant un ensemble de machines virtuelles, et un serveur hôte de détection 104 hébergeant une entité de détection VMdet.

## Revendications

1. Procédé de détection d'attaques dans un système (10) comprenant au moins deux serveurs hôtes, un serveur hôte étant destiné à héberger un ensemble de machines virtuelles, le procédé comprenant l'étape suivante, mise en œuvre par une entité de détection (VMdet) du système :
- détection (E0) qu'un nombre de migrations de machines virtuelles d'un serveur du système à un autre pendant une période de temps courante (T_{c}), est supérieur à une valeur seuil (Vₛ), le procédé étant **caractérisé en ce qu'**il comprend de surcroît les étapes suivantes, mises en œuvre par une entité de détection (VMdet) du système :
- partitionnement (E13) de l'ensemble des machines virtuelles du système en un premier sous-ensemble de machines virtuelles, dit à profil stable en termes de consommation d'au moins une ressource, et en un deuxième sous-ensemble, dit à profil fluctuant, le partitionnement étant fonction d'un indice de fluctuation représentatif pour une machine de l'ensemble d'une variation de la consommation de la ressource sur une fenêtre temporelle (F), les machines du premier sous-ensemble ayant un indice de fluctuation plus faible que les machines du deuxième sous-ensemble,
- calcul (E2), pour les couples de machines virtuelles du deuxième sous-ensemble, d'une valeur de corrélation temporelle entre les deux profils du couple,
- identification (E3) dans le deuxième sous-ensemble de machines virtuelles pour lesquelles la valeur de corrélation est supérieure ou égale à une valeur de corrélation seuil, lesdites machines étant identifiées comme à l'origine de l'attaque.

2. Procédé de détection selon la revendication 1, comprenant une étape (E12) de calcul d'un vecteur de fluctuation représentatif, pour la machine virtuelle de l'ensemble, de l'indice de fluctuation calculé à des instants successifs par déplacement de la fenêtre temporelle d'un pas, ledit pas étant associé à un relevé de mesure de consommation de la ressource, ledit vecteur étant utilisé au cours de l'étape de partitionnement de l'ensemble des machines virtuelles.

3. Procédé selon l'une des revendications précédentes, dans lequel la fenêtre temporelle est obtenue en calculant une moyenne entre des temps qui séparent deux migrations successives durant la période de temps courante.

4. Procédé selon l'une des revendications précédentes, dans lequel le partitionnement de l'ensemble des machines virtuelles est mis en œuvre au moyen de l'algorithme de partitionnement de données des k-moyennes.

5. Procédé selon l'une des revendications précédentes, dans lequel la valeur de corrélation entre deux profils de consommation est calculée au moyen de l'algorithme d'analyse des corrélations canoniques.

6. Procédé de détection selon l'une des revendications précédentes, dans lequel la ressource dont la consommation est mesurée est la mémoire, mesurée en pourcentage par rapport à la mémoire totale allouée.

7. Procédé de détection selon l'une des revendications 1 à 5, dans lequel la ressource dont la consommation est mesurée est le microprocesseur, mesurée en pourcentage de temps d'utilisation.

8. Procédé de détection selon l'une des revendications précédentes, comprenant, lorsqu'au moins deux machines virtuelles qui s'exécutent sur un même serveur hôte font partie des machines virtuelles à l'origine de l'attaque, une étape de définition d'une règle d'exclusion destinée à interdire, lors d'une migration ultérieure que les deux machines virtuelles s'exécutent sur le même serveur hôte.

9. Serveur de détection (104) mettant en œuvre une entité de détection d'attaque (VMdet) résidant dans une couche virtuelle du serveur de détection et compris dans un système (10) comprenant au moins deux serveurs hôtes, un serveur hôte étant destiné à héberger un ensemble de machines virtuelles, l'entité de détection comprenant :
- des moyens de détection (405), agencés pour détecter qu'un nombre de migrations de machines virtuelles d'un serveur du système à un autre pendant une période de temps courante (T_{c}), est supérieur à une valeur seuil (Vₛ), le serveur étant **caractérisé en ce que** l'entité de détection comprend de surcroît :
- des moyens de partitionnement (406), agencés pour partitionner l'ensemble des machines virtuelles du système en un premier sous-ensemble de machines virtuelles, dit à profil stable en termes de consommation d'au moins une ressource, et en un deuxième sous-ensemble, dit à profil fluctuant, le partitionnement étant fonction d'un indice de fluctuation représentatif pour une machine de l'ensemble d'une variation de la consommation de la ressource sur une fenêtre temporelle (F), les machines du premier sous-ensemble ayant un indice de fluctuation plus faible que les machines du deuxième sous-ensemble,
- des moyens de calcul (407), agencés pour calculer, pour les couples de machines virtuelles du deuxième sous-ensemble, une valeur de corrélation temporelle entre les deux profils du couple,
- des moyens d'identification (408), agencés pour identifier des machines virtuelles dans le deuxième sous-ensemble pour lesquelles la valeur de corrélation est supérieure ou égale à une valeur de corrélation seuil, lesdites machines étant identifiées comme étant à l'origine de l'attaque.

10. Système de détection (10) d'attaques comprenant :
- une grappe de serveurs (100) comprenant au moins deux serveurs hôtes, un serveur hôte hébergeant un ensemble de machines virtuelles, et
- un serveur de détection (104) hébergeant une entité de détection (VMdet) selon la revendication 9.

11. Programme d'ordinateur sur un support de données et chargeable dans la mémoire d'un ordinateur, le programme comprenant des instructions pour l'exécution des étapes du procédé de détection d'attaques selon l'une quelconque des revendications 1 à 8 lorsque le programme est exécuté sur ledit ordinateur.

12. Support de données dans lequel est enregistré le programme selon la revendication 11.

## Patentansprüche

1. Verfahren zur Detektion von Angriffen in einem System (10), welches wenigstens zwei Host-Server umfasst, wobei ein Host-Server dazu bestimmt ist, eine Menge virtueller Maschinen zu hosten, wobei das Verfahren den folgenden Schritt umfasst, der von einer Detektionseinheit (VMdet) des Systems durchgeführt wird:
- Detektion (E0), dass eine Anzahl von Migrationen virtueller Maschinen von einem Server des Systems zu einem anderen während eines aktuellen Zeitraums (T_{c}) größer als ein Schwellenwert (Vₛ) ist, wobei das Verfahren **dadurch gekennzeichnet ist, dass** es außerdem die folgenden Schritte umfasst, die von einer Detektionseinheit (VMdet) des Systems durchgeführt werden:
- Partitionierung (E13) der Menge der virtuellen Maschinen des Systems in eine erste Teilmenge virtueller Maschinen, als "mit stabilem Profil" in Bezug auf den Verbrauch wenigstens einer Ressource bezeichnet, und eine zweite Teilmenge, als "mit schwankendem Profil" bezeichnet, wobei die Partitionierung von einem Schwankungsindex abhängig ist, der, für eine Maschine der Menge, für eine Veränderung des Verbrauchs der Ressource in einem Zeitfenster (F) repräsentativ ist, wobei die Maschinen der ersten Teilmenge einen kleineren Schwankungsindex als die Maschinen der zweiten Teilmenge aufweisen,
- Berechnung (E2), für die Paare virtueller Maschinen der zweiten Teilmenge, eines Wertes der zeitlichen Korrelation zwischen den zwei Profilen des Paares,
- Identifizierung (E3), in der zweiten Teilmenge, von virtuellen Maschinen, für welche der Wert der Korrelation größer oder gleich einem Korrelationsschwellenwert ist, wobei diese Maschinen als Urheber des Angriffs identifiziert werden.

2. Verfahren zur Detektion nach Anspruch 1, welches einen Schritt (E12) der Berechnung eines Schwankungsvektors umfasst, der, für die virtuelle Maschine der Menge, für den Schwankungsindex repräsentativ ist, der zu aufeinander folgenden Zeitpunkten durch Verschiebung des Zeitfensters um einen Schritt berechnet wird, wobei dieser Schritt mit einer Gewinnung eines Messwertes des Verbrauchs der Ressource verbunden ist, wobei der Vektor im Schritt der Partitionierung der Menge der virtuellen Maschinen verwendet wird.

3. Verfahren nach einem der vorhergehenden Ansprüche, wobei das Zeitfenster erhalten wird, indem ein Mittelwert der Zeiten berechnet wird, welche zwei aufeinander folgende Migrationen während des aktuellen Zeitraums trennen.

4. Verfahren nach einem der vorhergehenden Ansprüche, wobei die Partitionierung der Menge der virtuellen Maschinen mithilfe des k-Means-Algorithmus zur Partitionierung von Daten durchgeführt wird.

5. Verfahren nach einem der vorhergehenden Ansprüche, wobei der Wert der Korrelation zwischen den zwei Profilen des Verbrauchs mithilfe des Algorithmus der kanonischen Korrelationsanalyse berechnet wird.

6. Verfahren zur Detektion nach einem der vorhergehenden Ansprüche, wobei die Ressource, deren Verbrauch gemessen wird, der Speicherplatz ist, gemessen als prozentualer Anteil am zugewiesenen gesamten Speicherplatz.

7. Verfahren zur Detektion nach einem der Ansprüche 1 bis 5, wobei die Ressource, deren Verbrauch gemessen wird, der Mikroprozessor ist, gemessen als prozentualer Anteil der Nutzungszeit.

8. Verfahren zur Detektion nach einem der vorhergehenden Ansprüche, welches, wenn wenigstens zwei virtuelle Maschinen, die auf ein und demselben Host-Server ausgeführt werden, zu den virtuellen Maschinen gehören, die Urheber des Angriffs sind, einen Schritt der Definition einer Ausschlussregel umfasst, die dazu bestimmt ist, bei einer späteren Migration zu verbieten, dass die zwei virtuellen Maschinen auf demselben Host-Server ausgeführt werden.

9. Detektionsserver (104), welcher eine Angriffsdetektionseinheit (VMdet) einsetzt, die in einer virtuellen Schicht des Detektionsservers resident ist und in einem System (10) enthalten ist, das wenigstens zwei Host-Server umfasst, wobei ein Host-Server dazu bestimmt ist, eine Menge virtueller Maschinen zu hosten, wobei die Detektionseinheit umfasst:
- Detektionsmittel (405), die dafür ausgelegt sind zu detektieren, dass eine Anzahl von Migrationen virtueller Maschinen von einem Server des Systems zu einem anderen während eines aktuellen Zeitraums (T_{c}) größer als ein Schwellenwert (Vₛ) ist, wobei der Server **dadurch gekennzeichnet ist, dass** die Detektionseinheit außerdem umfasst:
- Partitionierungsmittel (406), die dafür ausgelegt sind, die Menge der virtuellen Maschinen des Systems in eine erste Teilmenge virtueller Maschinen, als "mit stabilem Profil" in Bezug auf den Verbrauch wenigstens einer Ressource bezeichnet, und eine zweite Teilmenge, als "mit schwankendem Profil" bezeichnet, zu partitionieren, wobei die Partitionierung von einem Schwankungsindex abhängig ist, der, für eine Maschine der Menge, für eine Veränderung des Verbrauchs der Ressource in einem Zeitfenster (F) repräsentativ ist, wobei die Maschinen der ersten Teilmenge einen kleineren Schwankungsindex als die Maschinen der zweiten Teilmenge aufweisen,
- Berechnungsmittel (407), die dafür ausgelegt sind, für die Paare virtueller Maschinen der zweiten Teilmenge einen Wert der zeitlichen Korrelation zwischen den zwei Profilen des Paares zu berechnen,
- Identifizierungsmittel (408), die dafür ausgelegt sind, virtuelle Maschinen in der zweiten Teilmenge zu identifizieren, für welche der Wert der Korrelation größer oder gleich einem Korrelationsschwellenwert ist, wobei diese Maschinen als Urheber des Angriffs identifiziert werden.

10. System zur Detektion (10) von Angriffen, welches umfasst;
- ein Cluster von Servern (100), das wenigstens zwei Host-Server umfasst, wobei ein Host-Server eine Menge virtueller Maschinen hostet, und
- einen Detektionsserver (104), welcher eine Detektionseinheit (VMdet) hostet, nach Anspruch 9.

11. Computerprogramm auf einem Datenträger, das in den Speicher eines Computers ladbar ist, wobei das Programm Anweisungen zur Ausführung der Schritte des Verfahrens zur Detektion von Angriffen nach einem der Ansprüche 1 bis 8, wenn das Programm auf dem Computer ausgeführt wird, umfasst.

12. Datenträger, auf welchem das Programm nach Anspruch 11 aufgezeichnet ist.

## Claims

1. Method for detecting attacks in a system (10) comprising at least two host servers, a host server being intended to host a set of virtual machines, the method comprising the following step, implemented by a detection entity (VMdet) of the system:
- detection (E0) that a number of migrations of virtual machines from one server of the system to another during a current time period (T_{c}) is greater than a threshold value (Vₛ),
the method being **characterized in that** it further comprises the following steps, implemented by detection entity (VMdet) of the system:
- partitioning (E13) of the set of virtual machines of the system into a first subset of virtual machines, said to have stable profile in terms of consumption of at least one resource, and into a second subset, said to have fluctuating profile, the partitioning being dependent on a fluctuation index representative, for a machine of the set, of a variation of the consumption of the resource over a time window (F), the machines of the first subset having a lower fluctuation index than the machines of the second subset,
- computation (E2), for the pairs of virtual machines of the second subset, of a time correlation value between the two profiles of the pair,
- identification (E3) in the second subset of virtual machines for which the correlation value is greater than or equal to a threshold correlation value, said machines being identified as originating the attack.

2. Detection method according to Claim 1, comprising a step (E12) of computation of a fluctuation vector representative, for the virtual machine of the set, of the fluctuation index computed at successive instants by displacement of the time window by one step, said step being associated with a resource consumption measurement reading, said vector being used during the step of partitioning of the set of virtual machines.

3. Method according to either of the preceding claims, in which the time window is obtained by computing an average between times which separate two successive migrations during the current time period.

4. Method according to one of the preceding claims, in which the partitioning of the set of virtual machines is implemented by means of the k-means data partitioning algorithm.

5. Method according to one of the preceding claims, in which the correlation value between two consumption profiles is computed by means of the canonical correlation analysis algorithm.

6. Detection method according to one of the preceding claims, in which the resource for which the consumption is measured is the memory, measured as a percentage relative to the total memory allocated.

7. Detection method according to one of Claims 1 to 5, in which the resource for which the consumption is measured is the microprocessor, measured as a percentage of usage time.

8. Detection method according to one of the preceding claims, comprising, when at least two virtual machines which run on one and the same host server form part of the virtual machines originating the attack, a step of definition of an exclusion rule intended to prohibit, upon a subsequent migration, the two virtual machines from running on the same host server.

9. Detection server (104) implementing an attack detection entity (VMdet) resident in a virtual layer of the detection server and included in a system (10) comprising at least two host servers, a host server being intended to host a set of virtual machines, the detection entity comprising:
- detection means (405), arranged to detect that a number of migrations of virtual machines from one server of the system to another during a current time period (T_{c}) is greater than a threshold value (Vₛ) ,
the server being **characterized in that** the detection entity further comprises:
- partitioning means (406), arranged to partition the set of virtual machines of the system into a first subset of virtual machines, said to have stable profile in terms of consumption of at least one resource, and into a second subset, said to have fluctuating profile, the partitioning being dependent on a fluctuation index representative, for a machine of the set, of a variation of the consumption of the resource over a time window (F), the machines of the first subset having a fluctuation index lower than the machines of the second subset,
- computation means (407), arranged to compute, for the pairs of virtual machines of the second subset, a time correlation value between the two profiles of the pair,
- identification means (408), arranged to identify virtual machines in the second subset for which the correlation value is greater than or equal to a threshold correlation value, said machines being identified as originating the attack.

10. Attack detection system (10) comprising:
- a cluster of servers (100) comprising at least two host servers, a host server hosting a set of virtual machines, and
- a detection server (104) hosting a detection entity (VMdet) according to Claim 9.

11. Computer program on a data medium and that can be loaded into the memory of a computer, the program comprising instructions for the execution of the steps of the attack detection method according to any one of Claims 1 to 8 when the program is run on said computer.

12. Data medium in which is stored the program according to Claim 11.
